(19) Europäisches Patentamt
European Patent Office
Office européen des brevets

(11) **EP 2 248 683 A1**

(12) **EUROPEAN PATENT APPLICATION**
published in accordance with Art. 153(4) EPC

(43) Date of publication:
**10.11.2010 Bulletin 2010/45**

(51) Int Cl.:
*B60C 9/20* [(2006.01)]     *B60C 9/00* [(2006.01)]
*B60C 9/18* [(2006.01)]     *D07B 1/06* [(2006.01)]

(21) Application number: **09708719.1**

(22) Date of filing: **05.02.2009**

(86) International application number:
**PCT/JP2009/051992**

(87) International publication number:
**WO 2009/099154 (13.08.2009 Gazette 2009/33)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **06.02.2008   JP 2008026846**

(71) Applicant: **Bridgestone Corporation Tokyo 104-8340 (JP)**

(72) Inventor: **OYAMA, Yuji Kodaira-shi Tokyo 187-0031 (JP)**

(74) Representative: **Oxley, Robin John George Marks & Clerk LLP 90 Long Acre London WC2E 9RA (GB)**

(54) **PNEUMATIC TIRE FOR HEAVY LOADS**

(57)     Provided is a pneumatic tire for heavy loads in which durability and a desired rigidity in circumferential direction are simultaneously attained while achieving a reduction in the tire weight.

The present invention is a pneumatic tire for heavy loads having at least one layer of steel belt in which a plurality of steel cords 1, each of which is constituted by a plurality of intertwisted filaments 11, are arranged in parallel in the form of bundles. In the pneumatic tire for heavy loads, the height of cord bundles 2, that is, the minor axis (A) (mm) of the steel cords 1 and the bundle width (B) (mm), satisfy the relationship represented by the following Formula (1):

$$B/A \geq 2.0 \qquad (1),$$

and at the same time, the value of S = B/ (B + D), which is defined by the bundle width (B) (mm) of the cord bundles 2 and the distance (D) (mm) between the cord bundles, satisfies the relationship represented by the following Formula (2):

$$0.60 \leq S \leq 0.80 \qquad (2).$$

Fig. 1

( a )

( b )

**Description**

TECHNICAL FIELD

The present invention relates to a pneumatic tire for heavy loads (hereinafter, also simply referred to as "tire"). Particularly, the present invention relates to a pneumatic tire for heavy loads relating to an improvement of a steel belt.

BACKGROUND ART

In a steel belt of a pneumatic tire for heavy loads, steel cords are usually arranged and embedded at regular intervals. With regard to an improvement of steel cords applied to such belt, for example, Patent Document 1 discloses a pneumatic radial tire in which the steel cords of the belt layer are formed as cord bundles having a flat outer shape obtained by arranging strands at the number of N without substantially twisting them, which strands are constituted by a plurality of intertwisted steel wires.

In addition, for example, Patent Document 2 discloses a pneumatic radial tire in which the reinforcing elements of the belt layer are divided into bundles of not more than several reinforcing elements and arranged in juxtaposition with the adjacent reinforcing elements at an increased discrete distance, and at the same time, the ratio (d/l) of the bundle width (d) in a direction perpendicular to the reinforcing elements and the distance (1) between each bundle and the adjacent reinforcing elements is defined in a prescribed range.

Patent Document 1: Japanese Unexamined Patent Application Publication No. 2004-217158 (Claims and the like)
Patent Document 2: Japanese Unexamined Patent Application Publication No. H5-213007 (Claims and the like)

DISCLOSURE OF THE INVENTION

PROBLEMS TO BE SOLVED BY THE INVENTION

In recent years, there are more and more needs of resource saving and environmental performance. Tires are no exception and there is an increasing demand for weight reducing techniques. In response to such demand for weight reduction in tires, as a conventional method of reducing the belt weight, it is known to decrease the belt gauge using small-diameter cords. However, in this case, since it is necessary to increase the number of embedded cords in order to maintain the tire strength, the distance between the cords become small. Consequently, there is a problem of deterioration in so-called belt end separation (BES) performance which relates to the occurrence of cracks at belt ends.

In this respect, as a technique for avoiding a decrease in the distance between the cords, a method using bundled cords such as those disclosed in Patent Document 2 has been proposed. The main object of the technique according to Patent Document 2 is to maintain the tire durability by improving the belt; however, on the other hand, in a pneumatic tire for heavy loads used under a high pressure and high load, there is an increased need for rigidity in circumferential direction in order to suppress a diameter growth. A decrease in the circumferential rigidity in return for weight reduction is a fatal defect in the performance of a pneumatic tire for heavy loads. Therefore, when reducing the weight of belt of a pneumatic tire for heavy loads, it is required to contrive a design which attains not only durability, but also rigidity.

In view of the above, an object of the present invention is to provide a pneumatic tire for heavy loads which attains both durability and a desired rigidity in circumferential direction, while solving the aforementioned problems and enabling a reduction in the tire weight.

MEANS FOR SOLVING THE PROBLEMS

In order to reduce the weight of a steel belt, it is effective to reduce the treat thickness, that is, the minor axis of the steel cords. Further, in order to ensure durability, it is advantageous to increase the distance between the steel cords, as well as the gauge between layers. However, the rigidity is impaired when, by arranging the steel cords in the form of bundles, the distance between the cords is thoughtlessly widened and the gauge between layers is increased; therefore, it has been a major technical problem to attain both durability and rigidity at the same time.

In this respect, by investigating and revealing the mechanism of exhibiting rigidity when steel cords are arranged in the form of bundles, the present invention discovered the optimum range for the value of $S(S = B/(B + D))$ defined by the bundle width (B) of the cord bundles and the distance (D) between the cord bundles.

That is, in the first place, steel belt usually exhibit a strong rigidity when two steel belt layers are arranged in an intersecting fashion. In order to allow the rigidity to be efficiently exhibited, it is important to restrain deformation of the rubber between the two layers and the restraining effect is determined by the proportion of the steel contained in the belt (S = B/(B + D)). Therefore, it is thought that the aforementioned problems can be resolved by designing the arrangement of cord bundles in such a manner that the value of this S is in the optimum range. From such standpoint, the present inventor further carried out investigations to discover that weight reduction, as well as durability and rigidity, can be attained simultaneously by having the constitution described in the following, thereby completing the present invention.

That is, the pneumatic tire for heavy loads according to the present invention comprises at least one layer of steel belt in which a plurality of steel cords, each of which is constituted by a plurality of intertwisted filaments, are arranged in parallel in the form of bundles,

wherein the height of the aforementioned cord bundles, that is, the minor axis (A) (mm) of the aforementioned steel cords and the bundle width (B) (mm), satisfy the relationship represented by the following Formula (1):

$$B/A \geq 2.0 \qquad (1),$$

and the value of S = B/(B + D), which is defined by the bundle width (B) (mm) of the aforementioned cord bundles and the distance (D) (mm) between the cord bundles, satisfies the relationship represented by the following Formula (2):

$$0.60 \leq S \leq 0.80 \qquad (2).$$

In the present invention, it is preferred that the minor axis (A) (mm) of aforementioned steel cords and the diameter (F) (mm) of the aforementioned filaments satisfy the relationship represented by the following Formulae (3) and (4):

$$0.24 \leq F \leq 0.50 \qquad (3)$$

$$A/F \leq 3.0 \qquad (4),$$

and it is more preferred that the minor axis (A) (mm) of the steel cords and the diameter (F) (mm) of the filaments satisfy the relationship represented by the following Formulae (5) and (4) :

$$0.30 < F \leq 0.50 \qquad (5)$$

$$A/F \leq 3.0 \qquad (4).$$

EFFECTS OF THE INVENTION

According to the present invention, by arranging the steel cords constituting the steel belt in the form of cord bundles satisfying the aforementioned Formulae (1) and (2), a pneumatic tire for heavy loads having both durability and a desired rigidity in circumferential direction while attaining tire weight reduction can be achieved. In particular, by having cord bundles satisfying the aforementioned Formulae (3) and (4), the weight reducing effect can be further improved. In addition, by having cords satisfying the aforementioned Formulae (5) and (4), durability, rigidity in circumferential direction and weight reduction can be attained at a high level.

BRIEF DESCRIPTION OF THE DRAWINGS

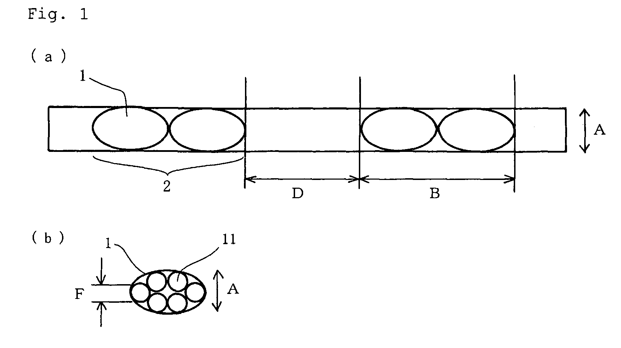

Fig. 1(a) is a schematic cross-sectional view showing the arrangement of the steel cords in the steel belt according to the present invention, and Fig. 1(b) is a cross-sectional view showing one of the steel cords taken out of the steel belt.

DESCRIPTION OF SYMBOLS

    1: Steel cord
    2: Cord bundle
    11: Filament

BEST MODE FOR CARRYING OUT THE INVENTION

Preferred embodiments of the present invention will be described in detail referring to the drawings.

Fig. 1(a) and Fig. 1(b) are, respectively, a schematic cross-sectional view showing the arrangement of the steel cords in the steel belt according to the present invention and a cross-sectional view showing one of the steel cords taken out of the steel belt. As shown in the figures, the pneumatic tire for heavy loads according to the present invention has at least one layer of steel belt in which a plurality of steel cords 1, each of which is constituted by a plurality of intertwisted filaments 11, are arranged in parallel in the form of bundles.

In the tire according to the present invention, it is important that the height of cord bundles 2, that is, the minor axis (A) (mm) of the steel cords and the bundle width (B) (mm), satisfy the relationship represented by the following Formula (1) :

$$B/A \geq 2.0 \qquad\qquad (1),$$

and at the same time, the value of S = B/(B + D), which is defined by the bundle width (B) (mm) of the cord bundles 2 and the distance (D) (mm) between the cord bundles 2, satisfies the relationship represented by the following Formula (2):

$$0.60 \leq S \leq 0.80 \qquad\qquad (2).$$

A weight reduction can be ensured by allowing the cord bundle 2 to satisfy the aforementioned Formula (1), and by allowing the cord bundle 2 to satisfy the aforementioned Formula (2), a balance between the rigidity in circumferential direction and durability can be attained. In cases where the S is less than 0.60, the distance between the cord bundles is increased and the restrain of the rubber between layers is simultaneously weakened, resulting in an insufficient rigidity in circumferential direction. On the other hand, in cases where the S is greater than 0.80, since the distance between the bundles is too narrow relative to the bundle width, the BES performance is deteriorated due to crack development.

In addition, from the standpoint of a further weight reduction of the belt, it is preferred that the minor axis (A) (mm) of the steel cords and the diameter (F) (mm) of the filaments 11 satisfy the relationship represented by the following Formulae (3) and (4):

$$0.24 \leq F \leq 0.50 \qquad\qquad (3)$$

$$A/F \leq 3.0 \qquad\qquad (4),$$

and it is more preferred that the relationship between the minor axis (A) (mm) of the steel cords and the diameter (F) (mm) of the filaments 11 be represented by the following Formulae (5) and (4) :

$$0.30 < F \leq 0.50 \qquad\qquad (5)$$

$$A/F \leq 3.0 \qquad (4).$$

By decreasing the treat thickness (A) in the above Formulae, a further weight reducing effect can be attained.

In the tire according to the present invention, the steel cords which constitute the steel belt satisfying the aforementioned conditions may be any steel cords as long as they are arranged in the form of bundles satisfying the aforementioned conditions. By having such steel cords, the expected effects of the present invention can be attained. For instance, the steel cord used in the present invention is a flat cord in the example shown in the figures; however, it is not restricted to such flat cord and may be a conventional cord having a circular cross section. There is no particular restriction in terms of the details of the tire structure except such cord arrangement in the form of bundles, and the tire can be appropriately constituted in accordance with a conventional method. For example, in the tire according to the present invention, at least one steel belt layer has to be arranged, and it is preferred that 3 to 4 steel belt layers be arranged. In the present invention, in cases where a plurality of steel belt layers are arranged, the aforementioned cord arrangement in the form of bundles is applied in at least one of the steel belt layers.

EXAMPLE

The present invention will be described in more detail by way of examples thereof.

A cord arrangement in the form of bundles in accordance with the conditions indicated in Tables below was applied in two main intersecting belt layers of four steel belt layers to produce pneumatic tires for heavy loads having a tire size of 11R22.5.

<Treat weight>

For each of the thus obtained test tires, the treat weight was determined in terms of the actually measured weight per unit area of the treat constituted by steel cords and rubber sheet. The results are indicated in indices taking the result of Conventional Example 1 as 100. A smaller value means a greater weight reducing effect.

<Rigidity in circumferential direction>

For each of the thus obtained test tires, the tire circumference was measured after an actual running test of 100,000 km to determine the rigidity in circumferential direction. Specifically, for each of the test tires after the 100,000 km-running test, the amount of circumferential growth was measured at the groove bottom of the central tread portion when the inner pressure was increased from 50 kPa to 700 kPa, and the rigidity in circumferential direction was calculated from the reciprocal of the thus measured value. The results are indicated in indices taking the result of Conventional Example 1 as 100. A larger value means that the tire had a greater rigidity.

<BES performance>

For each of the thus obtained test tires, the main intersecting belts were dissected after the 100,000 km-running test and the length of cracks between the belt layers in the tire circumferential direction was measured. Based on the average value, the BES performance was determined. The results are indicated in indices taking the average length of cracks obtained in Conventional Example 1 as 100. A smaller value means a superior durability.

The aforementioned evaluation results are shown together in the following Tables. Here, the evaluations in the following Tables allocated: ◎ when the result was particularly good; ○ when the result was good; △ when the result was ordinary; and × when the result was slightly inferior.

[Table 1]

| | Conventional Example 1 | Example 1 | Example 2 | Example 3 | Example 4 | Example 5 |
|---|---|---|---|---|---|---|
| Cord structure | 1 + 6 | 1 × 3 | 1 × 3 | 1 × 4 | 1 × 4 | 1 + 6 |
| Filament diameter (F) (mm) | 0.34 | 0.34 | 0.34 | 0.34 | 0.34 | 0.28 |
| Cord minor axis (bundle height) (A) (mm) | 1.07 | 0.75 | 0.75 | 0.86 | 0.86 | 0.89 |
| The number of cords in the bundle | 1 | 3 | 4 | 2 | 3 | 2 |
| Bundle width (B) (mm) | 1.25 | 2.25 | 3.00 | 1.72 | 2.58 | 1.78 |
| Distance between bundles (D) (mm) | 0.82 | 0.82 | 0.82 | 0.82 | 0.82 | 0.82 |
| B/A | 1.17 | 3.00 | 4.00 | 2.00 | 3.00 | 2.00 |
| A/F | 3.15 | 2.21 | 2.21 | 2.53 | 2.53 | 3.18 |
| The number of embedded cords (cords/50 mm) | 24.21 | 16.29 | 13.09 | 19.69 | 14.71 | 19.23 |
| S (= B/(B+D)) | 0.60 | 0.73 | 0.79 | 0.68 | 0.76 | 0.68 |
| Treat weight (index) | 100 | 83 | 87 | 90 | 96 | 95 |
| Rigidity in circumferential direction (index) | 100 | 100 | 110 | 105 | 120 | 100 |
| BES performance (index) | 100 | 94 | 103 | 88 | 90 | 105 |
| Evaluation — Treat weight | Control | ◎ | ○ | ○ | ○ | ○ |
| Evaluation — Rigidity in circumferential direction | Control | ○ | ◎ | ◎ | ◎ | ○ |
| Evaluation — BES performance | Control | ○ | ○ | ○ | ○ | ○ |
| Evaluation — Overall Evaluation | Control | ○ | ○ | ○ | ○ | ○ |

[Table 2]

|  |  | Example 6 | Example 7 | Example 8 | Example 9 |
|---|---|---|---|---|---|
| Cord structure |  | 1 × 5 | 2 + 6 | 1 × 2 | 1 + 6 |
| Filament diameter (F) (mm) |  | 0.34 | 0.32 | 0.50 | 0.31 |
| Cord minor axis (bundle height) (A) (mm) |  | 1.00 | 0.95 | 1.00 | 0.93 |
| The number of cords in the bundle |  | 2 | 2 | 3 | 2 |
| Bundle width (B) (mm) |  | 200 | 2.09 | 3.00 | 2.28 |
| Distance between bundles (D) (mm) |  | 1.30 | 1.20 | 1.30 | 1.00 |
| B/A |  | 2.00 | 2.00 | 3.00 | 2.38 |
| A/F |  | 2.94 | 2.97 | 2.00 | 3.00 |
| The number of embedded cords (cords/50 mm) |  | 15.15 | 15.20 | 11.63 | 15.24 |
| S (= B/(B+D)) |  | 0.61 | 0.64 | 0.70 | 0.70 |
| Treat weight (index) |  | 95 | 94 | 92 | 95 |
| Rigidity in circumferential direction (index) |  | 100 | 105 | 110 | 105 |
| BES performance (index) |  | 70 | 80 | 65 | 90 |
| Evaluation | Treat weight | ○ | ○ | ○ | ○ |
|  | Rigidity in circumferential direction | ○ | ◎ | ◎ | ◎ |
|  | BES performance | ◎ | ◎ | ◎ | ○ |
|  | Overall Evaluation | ○ | ○ | ○ | ○ |

[Table 3]

| | | Comparative Example 1 | Comparative Example 2 | Conventional Example 2 | Conventional Example 3 |
|---|---|---|---|---|---|
| Cord structure | | 1 × 3 | 1 + 6 | 1 × 5 | 1 + 3 + 8 |
| Filament diameter (F) (mm) | | 0.3 | 0.28 | 0.38 | 0.35 |
| Cord minor axis (bundle height) (A) (mm) | | 0.75 | 0.89 | 1.15 | 1.46 |
| The number of cords in the bundle | | 2 | 5 | 1 | 1 |
| Bundle width (B) (mm) | | 1.50 | 4.45 | 1.15 | 1.46 |
| Distance between bundles (D) (mm) | | 1.12 | 0.70 | 0.73 | 0.85 |
| B/A | | 2.00 | 5.00 | 1.00 | 1.00 |
| A/F | | 2.5 | 3.18 | 3.03 | 4.17 |
| The number of embedded cords (cords/50 mm) | | 19.08 | 9.71 | 26.60 | 21.65 |
| S (= B/(B+D)) | | 0.57 | 0.86 | 0.61 | 0.63 |
| Treat weight (index) | | 78 | 100 | 105 | 148 |
| Rigidity in circumferential direction (index) | | 80 | 130 | 100 | 120 |
| BES performance (index) | | 65 | 280 | 95 | 90 |
| Evaluation | Treat weight | ◎ | △ | × | × |
| | Rigidity in circumferential direction | × | ◎ | ○ | ◎ |
| | BES performance | ◎ | × | ○ | ○ |
| | Overall Evaluation | × | × | × | × |

As shown in Tables in the above, based on the result that the value of S was approximately 0.6 in all of Conventional Examples 1 to 3, it can be seen that the value of S needs to be increased in order to achieve weight reduction and ensure rigidity. In contrast, compared to Conventional Example 1, a weight reduction was achieved in Examples 1 to 9 and at the same time, both rigidity and durability were attained. In these Examples 1 to 9, the tires were designed in such a manner that the value of S was greater than that of Conventional Example 1 (= 0.60) and that the conditions of the present invention were satisfied. Accordingly, it was confirmed that such a tire design allows both rigidity and durability to be attained simultaneously. Further, it was confirmed that, by having satisfactory values of F and A/F, not only rigidity and durability, but also a further weight reduction can be attained.

On the other hand, in Comparative Example 1 in which the value of S was less than 0. 60, although a drastic weight reduction was attained and the durability was improved, the rigidity in circumferential direction was greatly reduced, resulting in an increased diameter growth. Further, in Comparative Example 2 in which the value of S was greater than 0.80, although the rigidity in circumferential direction was improved, the durability was largely deteriorated. Consequently, in both Comparative Examples 1 and 2, light weight, rigidity and durability could not be simultaneously achieved.

## Claims

1.   A pneumatic tire for heavy loads, which comprises at least one layer of steel belt in which a plurality of steel cords, each of which is constituted by a plurality of intertwisted filaments, are arranged in parallel in the form of bundles, wherein the height of the cord bundles, that is, the minor axis (A) (mm) of said steel cords and the bundle width (B) (mm), satisfy the relationship represented by the following Formula (1) :

$$B/A \geq 2.0 \qquad (1),$$

and the value of S = B/(B + D), which is defined by the bundle width (B) (mm) of said cord bundles and the distance (D) (mm) between said cord bundles, satisfies the relationship represented by the following Formula (2):

$$0.60 \leq S \leq 0.80 \qquad (2).$$

2. The pneumatic tire for heavy loads according to claim 1, wherein the minor axis (A) (mm) of said steel cords and the diameter (F) (mm) of said filaments satisfy the relationship represented by the following Formulae (3) and (4):

$$0.24 \leq F \leq 0.50 \qquad (3)$$

$$A/F \leq 3.0 \qquad (4).$$

3. The pneumatic tire for heavy loads according to claim 1, wherein the minor axis (A) (mm) of said steel cords and the diameter (F) (mm) of said filaments satisfy the relationship represented by the following Formulae (5) and (4):

$$0.30 < F \leq 0.50 \qquad (5)$$

$$A/F \leq 3.0 \qquad (4).$$

Fig. 1

( a )

( b )

| **INTERNATIONAL SEARCH REPORT** | International application No. |
| --- | --- |
| | PCT/JP2009/051992 |

| A. CLASSIFICATION OF SUBJECT MATTER |
| --- |
| *B60C9/20*(2006.01)i, *B60C9/00*(2006.01)i, *B60C9/18*(2006.01)i, *D07B1/06* (2006.01)i |
| According to International Patent Classification (IPC) or to both national classification and IPC |

| B. FIELDS SEARCHED |
| --- |
| Minimum documentation searched (classification system followed by classification symbols) B60C9/20, B60C9/00, B60C9/18, D07B1/06 |
| Documentation searched other than minimum documentation to the extent that such documents are included in the fields searched Jitsuyo Shinan Koho 1922-1996 Jitsuyo Shinan Toroku Koho 1996-2009 Kokai Jitsuyo Shinan Koho 1971-2009 Toroku Jitsuyo Shinan Koho 1994-2009 |
| Electronic data base consulted during the international search (name of data base and, where practicable, search terms used) |

| C. DOCUMENTS CONSIDERED TO BE RELEVANT |||
| --- | --- | --- |
| Category* | Citation of document, with indication, where appropriate, of the relevant passages | Relevant to claim No. |
| X | JP 5-213007 A (Bridgestone Corp.), 24 August, 1993 (24.08.93), Claims 1, 2, 4; Par. Nos. [0018] to [0026]; tables 1, 2; Figs. 1, 6 (Family: none) | 1-3 |
| X | Microfilm of the specification and drawings annexed to the request of Japanese Utility Model Application No. 8279/1986(Laid-open No. 120004/1987) (Sumitomo Rubber Industries, Ltd.), 30 July, 1987 (30.07.87), Full text; all drawings (Family: none) | 1-3 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search 20 April, 2009 (20.04.09) | Date of mailing of the international search report 28 April, 2009 (28.04.09) |
| --- | --- |
| Name and mailing address of the ISA/ Japanese Patent Office | Authorized officer |
| Facsimile No. | Telephone No. |

Form PCT/ISA/210 (second sheet) (April 2007)

## INTERNATIONAL SEARCH REPORT

| | International application No. |
|---|---|
| | PCT/JP2009/051992 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 4-95505 A  (Bridgestone Corp.),<br>27 March, 1992 (27.03.92),<br>Page 3, upper right column, line 12 to page 5,<br>upper left column, line 16<br>(Family: none) | 1-3 |
| A | JP 11-78410 A  (Bridgestone Corp.),<br>23 March, 1999 (23.03.99),<br>Par. Nos. [0007] to [0029]<br>(Family: none) | 1-3 |
| A | JP 2004-66911 A  (Bridgestone Corp.),<br>04 March, 2004 (04.03.04),<br>Par. Nos. [0012] to [0013]; Figs. 2 to 4<br>(Family: none) | 1-3 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004217158 A

- JP H5213007 B